(19) **Europäisches Patentamt / European Patent Office / Office européen des brevets**

(11) **EP 4 613 571 A1**

(12) **EUROPEAN PATENT APPLICATION**
published in accordance with Art. 153(4) EPC

(43) Date of publication:
**10.09.2025 Bulletin 2025/37**

(21) Application number: **23900554.9**

(22) Date of filing: **30.11.2023**

(51) International Patent Classification (IPC):
**B60R 21/2338** (2011.01)  **B60R 21/203** (2006.01)
**B60R 21/205** (2011.01)

(52) Cooperative Patent Classification (CPC):
**B60R 21/203; B60R 21/205; B60R 21/2338**

(86) International application number:
**PCT/JP2023/042904**

(87) International publication number:
**WO 2024/122439 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 JP 2022196142**

(71) Applicant: **Autoliv Development AB
44783 Vargarda (SE)**

(72) Inventors:
• **SHIGA, Yumi**
  **Yokohama-shi, Kanagawa 222-8580 (JP)**
• **ISHIGAKI, Ryota**
  **Yokohama-shi, Kanagawa 222-8580 (JP)**
• **NAKAYAMA, Yasuhisa**
  **Yokohama-shi, Kanagawa 222-8580 (JP)**
• **MIURA, Yuka**
  **Yokohama-shi, Kanagawa 222-8580 (JP)**

(74) Representative: **Feucker, Max Martin et al
Becker & Müller
Patentanwälte
Turmstraße 22
40878 Ratingen (DE)**

(54) **AIRBAG DEVICE**

(57)     To provide an airbag device capable of adequately protecting an occupant. The present invention is an airbag device for protecting an occupant inside a vehicle, comprising: an airbag that expands and deploys toward the occupant by means of expansion gas; and a left tether and a right tether that are provided inside the airbag and that regulates the deployed shape of the airbag. The airbag has a front surface facing the occupant, and a right side surface and a left side surface located on either side of the front surface. The front end of the left tether is connected to the inside of the left side surface of the airbag and the rear end is connected to the front surface, and the front end of the right tether is connected to the inside of the right side surface of the airbag and the rear end is connected to the front surface. Furthermore, the airbag has a recess between the right side tether and the left side tether on the front side thereof, the recess being recessed toward the inside of the airbag, and when a cross section passing through the left-right center of the recess and extending in the front-to-back direction of the vehicle is viewed from one side in the left-right direction, an upper inclined surface and a lower inclined surface are formed with the vertical middle part of the recess as a boundary; and the lower inclined surface is configured to protrude more toward the occupant than the upper inclined surface with respect to a vertical line on the cross section passing through the boundary.

[FIG. 3]

Processed by Luminess, 75001 PARIS (FR)

**Description**

**TECHNICAL FIELD**

The present invention relates to an airbag device for protecting an occupant riding in a vehicle.

**BACKGROUND ART**

The provision of a vehicle with one or more kinds of airbags in order to protect an occupant in the event of a vehicle accident is well known. There are various forms of airbags, including, for example, a so-called driver airbag that expands from a vicinity of a center of a steering wheel of an automobile in order to protect a driver, a passenger airbag that expands from the instrument panel in order to protect an occupant in a passenger seat, a curtain airbag that deploys downward inside a window of the automobile in order to protect the occupant in the event of an impact in the vehicle lateral direction or an overturn or rollover accident, and a side airbag that deploys from a side of a seat in order to protect the occupant in the event of an impact in the vehicle lateral direction.

In a passenger airbag or a driver airbag that deploys in front of the occupant, the deployed shape of the area of the deployed airbag that faces the occupant significantly affects the occupant restraint performance. For example, if the airbag deploys like a sphere, the head of the occupant entering the airbag will be ejected, making it difficult to adequately restrain the occupant and possibly resulting in injury to the head.

**SUMMARY OF THE INVENTION**

**PROBLEM TO BE SOLVED BY THE INVENTION**

In light of the conditions described above, an object of the present invention is to provide an airbag device that can appropriately protect the occupant.

**MEANS FOR SOLVING THE PROBLEM**

In order to resolve the problem described above, the present invention is an airbag device for protecting an occupant inside a vehicle, including: an airbag that expands and deploys toward the occupant by means of expansion gas; and a left tether and a right tether that are provided inside the airbag and that regulate the deployed shape of the airbag. The airbag has a front surface facing the occupant, and a right side surface and a left side surface located on either side of the front surface. The front end of the left tether is connected to the inside of the left side surface of the airbag and the rear end is connected to the front surface, and the front end of the right tether is connected to the inside of the right side surface of the airbag and the rear end is connected to the front surface. Furthermore, the airbag has a recess between the right side tether and the left side tether on the front side thereof, the recess being recessed toward the inside of the airbag, and when a cross section passing through the left-right center of the recess and extending in the front-to-back direction of the vehicle is viewed from one side in the left-right direction, an upper inclined surface and a lower inclined surface are formed with the vertical middle part of the recess as a boundary; and the lower inclined surface is configured to protrude more toward the occupant than the upper inclined surface with respect to a vertical line on the cross section passing through the boundary.

In addition, the "vertical center part of the recess" may refer to, for example, the deepest recessed part when the recess has a certain extent in the vertical direction, and is not necessarily limited to the center or central part.

As described above, with the present invention, the rear ends of the left and right tethers are connected to the front of the airbag, the airbag is pulled by the tethers, and the left and right outer portions of the rear ends of the tethers deploy so as to protrude toward the occupant. As a result, the restraint performance of the occupant's head in the left and right lateral directions is improved.

In addition, the upper inclined surface and lower inclined surface are formed above and below the recess part, so that the cross section is shaped like the letter "C" when viewed from the left-right width direction. **In** other words, no large bulging areas that protrude toward the occupant are formed above or below the recess part. Therefore, even if the chin of a small occupant (AM05) comes into contact with the airbag, the deterioration of the injury value can be minimized. Due to the characteristics of the airbag, the upper inclined surface and lower inclined surface are not completely flat, but the degree of bulging is clearly smaller than that of other portions.

The angle formed by the tangent line of the upper inclined surface immediately above the boundary and the vertical line may be equal to or smaller than the angle formed by the tangent line of the lower inclined surface immediately below the boundary and the vertical line.

Here, "directly below the boundary" means the part closest to the boundary when the lower inclined surface extending from the boundary curves and bulges toward the lowest point of the airbag and protrudes toward the occupant (rearward).

Each of the left tether and the right tether may be formed such that the vertical length of the rear end is greater than the vertical length of the front end.

Because the width LB of the rear ends (front sides) of the left and right tethers is set larger than the width LA of their front ends (side surface), the tension near the center (LB3) at the front ends of the tethers is greater than the tension on the outsides (LB1, LB2), forming a deep recess part near the center. The front surface of the airbag is inclined toward the occupant P moving away from the deep recess part in the vertical direction.

This is because the shortest distance Lm between the front end of the tether and the rear end of the tether on the connection (sewn or the like) line with the airbag increases toward the outside in the width direction. As a result, the tension of the tether increases in the portion (LB3) of the front surface of the airbag where the shortest distance Lm is short, resulting in the formation of a deep recess part in that portion. In addition, since the tension of the tether is small in the portions (LB1, LB2) where the shortest distance Lm is long, the tether is inclined in a direction approaching the occupant moving away from the deep recess part. As a result, the head of the occupant can be appropriately restrained regardless of the physique of the occupant.

The airbag may include a front panel that defines an area including the front surface, and a pair of side panels that define the left side surface and the right side surface.

The left tether and the right tether may be formed to have the same shape.

When the airbag is deployed, the rear ends of the left tether and the right tether preferably extend parallel to each other in a substantially vertical direction on the front surface of the airbag.

The left tether and the right tether may each be formed into a generally trapezoid shape having parallel short and long sides, where the short side of the trapezoid corresponds to the front end, and the long side of the trapezoid corresponds to the rear end.

Here, the term "trapezoid" does not necessarily mean a perfect trapezoid, but includes shapes in which the short and long sides are slightly deviated from being parallel. Furthermore, when expressing the planar shape of the tether as a "trapezoid," it may be a shape in which a right-angled triangle is connected to two opposing sides of a rectangle.

Each of the left and right tethers is roughly trapezoidal, with the short sides of the trapezoid connected to the left and right sides of the airbag and the long sides connected to the front of the airbag. Therefore, when the airbag deploys, a recess is formed near the center of the front, and within the range of the long side of the trapezoid, the upper and lower regions LB1, LB2 of the portion LB3 facing the short side are inclined so as to protrude toward the occupant.

When two imaginary lines are drawn extending perpendicularly from both ends of the short sides of the trapezoid toward the long side, the length from the point where the upper line of the imaginary lines intersects with the long side to the upper end of the long side is defined as LB1, and the length from the point where the lower line of the imaginary lines intersects with the long side to the lower end of the long side is defined as LB2, and LB1 may be configured to be shorter than LB2. In addition, when the length of the oblique side connecting the upper end of the front end sewing line along the short side of the trapezoid and the upper end of the rear end sewing line along the long side is defined as OB1, and the length of the oblique side connecting the lower end of the front end sewing line along the short side and the lower end of the rear end sewing line along the long side is defined as OB2, the sum of OB1 and LB1 may be configured to be shorter than the sum of OB2 and LB2.

Each of the left tether and the right tether may be based on a trapezoid having parallel short and long sides, where a lower end portion of the long side of the trapezoid is formed into a shape with a notch part that is cut in toward the short side, the short side of the tether corresponds to the front end, and the long side of the tether corresponds to the rear end. In this case, the shape of the end part of the notch part may be either straight or curved and bulging outward. In addition, instead of the notch, a configuration may be provided in which a protruding part is provided in which the lower end portion of the long side of the trapezoid protrudes in the opposite direction to the short side.

Each of the left tether and the right tether is basically rectangular, where a first side of the rectangle extends linearly and a second side, opposite the first side, is formed in a shape that is concave toward the inside, the first side of the tether corresponding to the front end, and the second side of the tether corresponding to the rear end.

Each of the left tether and the right tether is formed in a rectangular shape, with a first opposing side connected to the side surface and a second side connected to the front surface.

Each of the left tether and the right tether is formed in a "C" shape that expands vertically from the front end toward the rear end. In this case, the portion corresponding to the corner of the "C" shape can be formed to reach the front end. The "C" shape can also be described as a V-shape tilted 90 degrees to the side.

The airbag device may be a passenger airbag device stowed in an instrument panel of a vehicle, or a driver airbag device stowed in a steering wheel of a vehicle.

Note that in the specification, claims, and drawings of the present application, "front" refers to the front (in the traveling direction) of a vehicle, "rear" refers to the rear (opposite the traveling direction) of the vehicle, "right" refers to the right side in the traveling direction, "left" refers to the left side in the traveling direction, and "vehicle width direction" refers to the left-to-right direction.

**BRIEF DESCRIPTION OF THE DRAWINGS**

FIG. 1 is a side view depicting a deployed state of the airbag according to the present invention;
FIG. 2 corresponds to a cross section in the A1-A1 direction of FIG. 1 depicting a deployed state of an airbag according to Embodiment 1 of the present invention;

FIG. 3 is a perspective view depicting a deployed state of the airbag according to Embodiment 1 of the present invention;

FIG. 4 is a front view depicting a deployed state of the airbag according to Embodiment 1 of the present invention;

FIG. 5 is a perspective view depicting the deployed state of the airbag according to Embodiment 1 of the present invention, and is used to describe the deployed shape of the airbag;

FIG. 6(A) and (B) are explanatory diagrams depicting characteristic portions of the deployed shape of the airbag according to Embodiment 1 of the present invention;

FIG. 7 is a plan view depicting a panel structure of the airbag according to Embodiment 1 of the present invention;

FIG. 8A is a plan view depicting a panel structure of a tether according to Embodiment 1 of the present invention;

FIG. 8B(a) is a side view depicting the shape of a recess formed in the front panel when the airbag of Embodiment 1 is expanded and deployed, and FIG. 8B(b) is an enlarged view depicting the shape of the tether when tension is applied inside the airbag, thereby setting the shape of the recess;

FIG. 8C is a plan view depicting a panel structure of a tether according to a modified example of Embodiment 1;

FIG. 9A is a plan view depicting a configuration of a tether according to a modified example of Embodiment 2 of the present invention;

FIG. 9B is a plan view depicting a panel structure of a tether according to a modified example of Embodiment 2;

FIG. 9C(a) is a side view depicting the shape of a recess formed in the front panel when an airbag according to a modified example of Embodiment 2 is expanded and deployed, and FIG. 9C(b) is an enlarged view depicting the shape of a tether when tension is applied; thereby setting the shape of the recess by being stretched inside the airbag;

FIG. 10A is a plan view depicting a panel structure of a tether according to Embodiment 3 of the present invention;

FIG. 10B(a) is a side view depicting the shape of a recess formed in the front panel when the airbag of Embodiment 3 is expanded and deployed, and FIG. 10B(b) is an enlarged view depicting the shape of the tether when tension is applied inside the airbag, thereby setting the shape of the recess;

FIG. 11 is a plan view depicting a configuration of a tether according to Embodiment 4 of the present invention; and

FIG. 12(A), (B), and (C) are plan views depicting the configurations of tethers according to Embodiments 5, 6, and 7 of the present invention.

## DESCRIPTION OF THE PREFERRED EMBODIMENTS

Occupant airbag device 1 according to the Embodiment of the present invention is described in detail below based on the accompanying drawings. Note that in the present embodiment, while an occupant P is based on an experimental dummy, it goes without saying that the same functions will be achieved with an actual occupant (human).

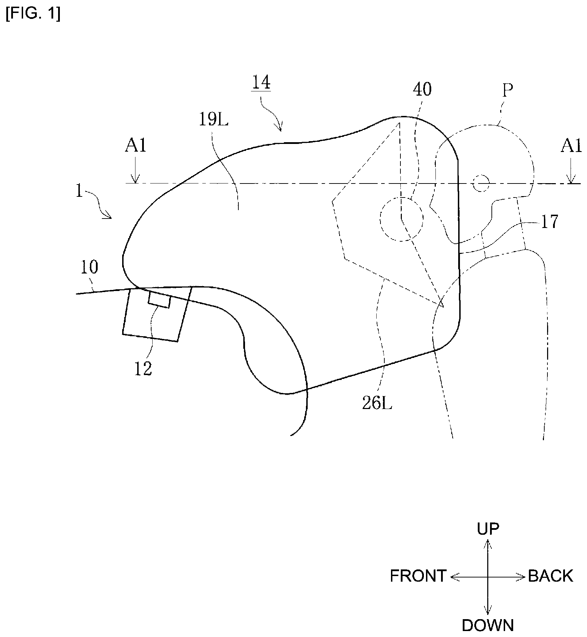

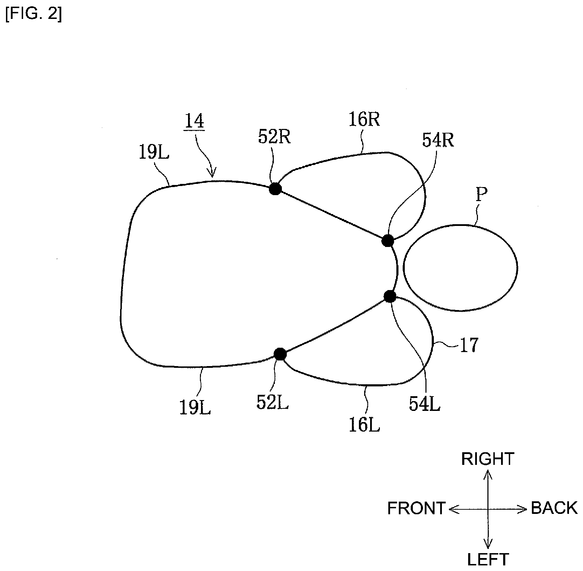

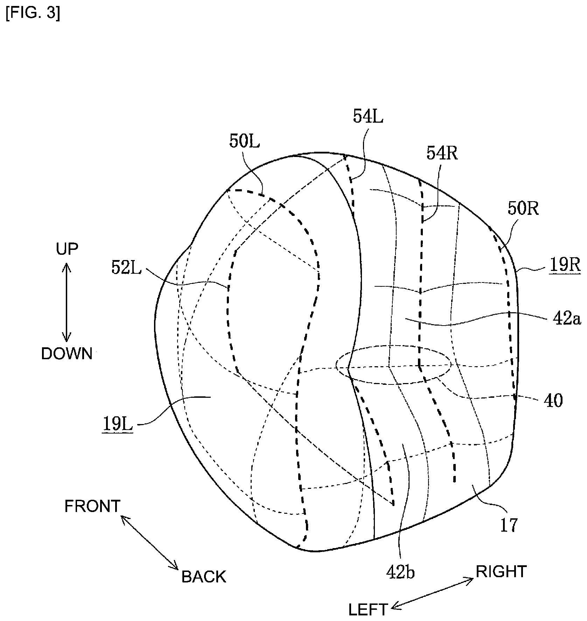

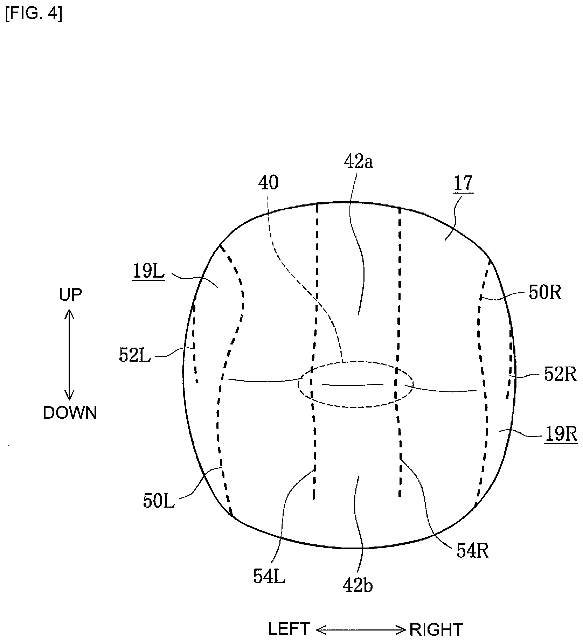

FIG. 1 is a side view depicting a deployed state of the airbag according to the present invention. FIG. 2 corresponds to a cross section in the A1-A1 direction of FIG. 1 depicting the deployed state of an airbag according to Embodiment 1 of the present invention. FIG. 3 is a perspective view depicting a deployed state of the airbag according to Embodiment 1 of the present invention. FIG. 4 is a front view depicting a deployed state of the airbag according to Embodiment 1 of the present invention.

As shown in FIG. 1 and FIG. 2, the passenger seat airbag device 1 of the present embodiment is stowed inside an instrument panel 10 of a vehicle and includes: an inflator 12 that generates expansion gas; an airbag 14 that is expanded and deployed toward an occupant P by the expansion gas; and a left tether (26L) and a right tether (26R) that are provided inside the airbag 14 and that regulate the deployed shape of the airbag 14. The left and right tethers 26L, 26R will be described in detail later.

As depicted in FIG. 2, the fully deployed airbag 14 has protrusions 16L and 16R on both the left and right sides of the front surface thereof that protrude toward the occupant. These protrusions 16L, 16R are formed by restricting the deployed shape of the airbag 14 with a left tether 26L and a right tether 26R. The sewing positions between the front end of the left tether 26L and the airbag 14 and between the rear end of the left tether and the airbag 14 are indicated by 52L and 54L. Similarly, the sewing positions between the front end of the right tether 26R and the airbag 14 and between the rear end of the right tether and the airbag 14 are indicated by 52R and 54R.

As depicted in FIG. 3 and FIG. 4, the airbag 14 has a front surface 17 facing the occupant, and a right side surface 19R and a left side surface 19L positioned on either side of the front surface 17. A front end 26La of the left tether 26L is connected to the inside of the left side surface 19L of the airbag 14, and a rear end 26Lb is connected to the front surface 17 of the airbag 14. Similarly, a front end 26Ra of the right tether 26R is connected to the inside of the right side surface 19R of the airbag 14, and a rear end 26Rb is connected to the front surface 17 of the airbag 14.

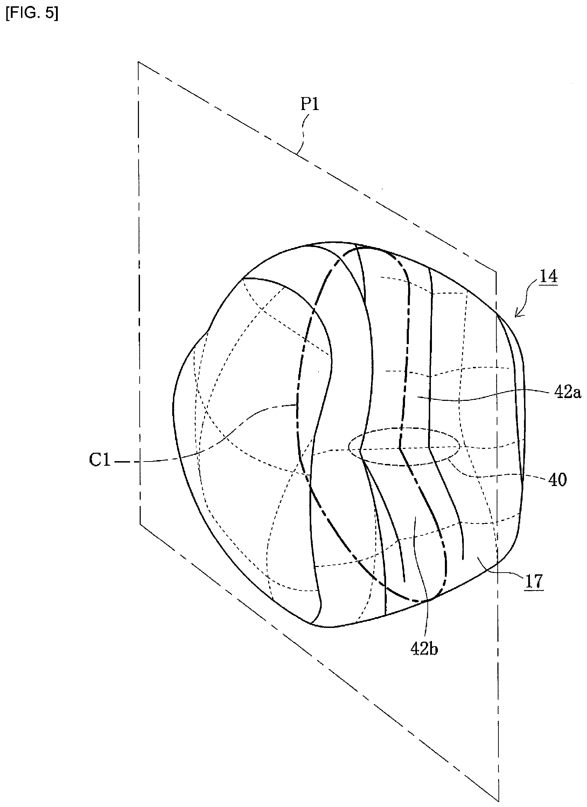

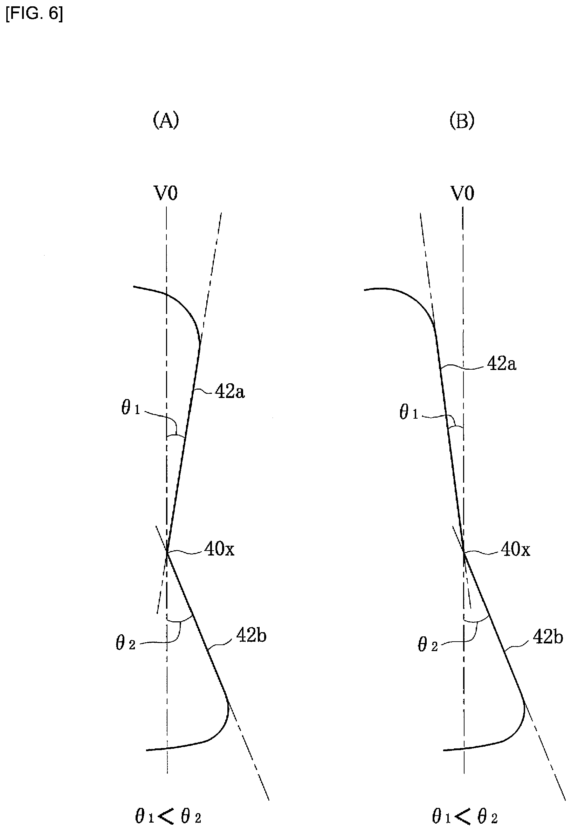

FIG. 5 is a perspective view depicting the deployed state of the airbag according to Embodiment 1 of the present invention, and is used to describe the deployed shape of the airbag. FIG. 6 is an explanatory diagram depicting a characteristic portion of the deployed shape of the airbag according to Embodiment 1 of the present invention. With the present embodiment, a recess part 40 recessed toward the inside of the airbag 14 is provided on the front surface 17 of the airbag 14 between the right tether 26R and the left tether 26L. When a cross section P1 passing through the left-right center of the recess part 40 and extending in the front-to-back direction of the vehicle is viewed from one side in the left-right direction, an upper inclined surface 42a and a lower inclined surface 42b are formed with the vertical center part 40x of the recess part 40 as the boundary. Here, the center part 40x may be the deepest recessed part (deep recess part) of the recess part 40 which has a certain extent in the vertical direction, and is not necessarily limited to the center of the recess part 40 in the vertical direction. The "boundary" is the border where the upper inclined surface 42a and the lower inclined surface 42b intersect.

The lower inclined surface 42b is configured to protrude further toward the occupant than the upper inclined surface 42a with respect to a vertical line V0 on a cross section passing through the center part 40x. That is, the inclination angle $\theta1$ of the upper inclined surface 42a with respect to the vertical line V0 is smaller than the inclination angle $\theta2$ of the lower inclined surface 42b with respect to the vertical line V0. In FIG. 6, (A) depicts a case where the upper inclined surface 42a is inclined toward the occupant (rearward), and (B) depicts a case where the upper inclined surface 42a is inclined away from the occupant (forward).

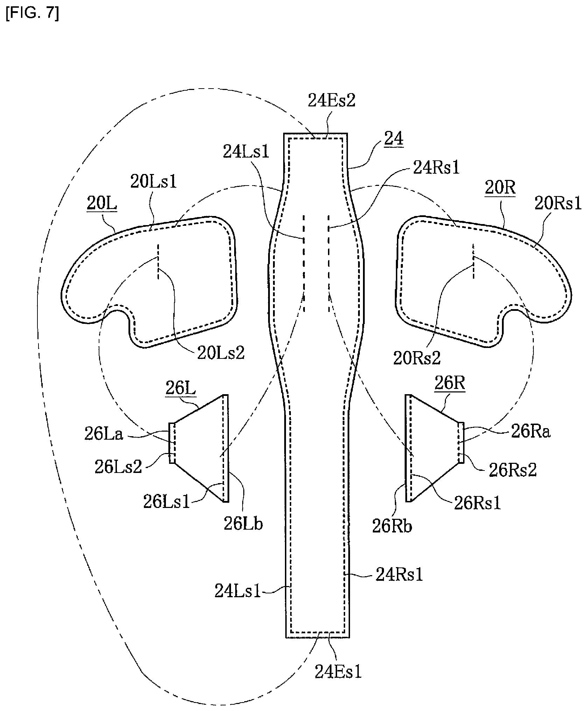

FIG. 7 is a plan view depicting a panel structure of the airbag 14 according to Embodiment 1 of the present invention. As depicted in FIG. 3, 4, and 7, the airbag 14 includes a front panel 24 that forms an area including the front surface 17, a pair of side panels 20L, 20R that form the left side surface 19L and the right side surface 19R, and a left tether 26L and a right tether 26R.

The front panel 24 is formed in a long strip shape overall, with the portion facing the occupant being wider. The side panels 20L, 20R are formed to have the same shape. Each side panel has a shape that protrudes toward the front of the vehicle (the side opposite the occupant), and this protrudes toward the inside of the instrument panel 10.

The left tether 26L and the right tether 26R are formed in the same shape. The left tether 26L is formed in a trapezoid shape having a short side 26La and a long side 26Lb. Similarly, the right tether 26R is formed in a trapezoid shape having a short side 26Ra and a long side 26Rb.

As depicted in FIG. 7 and in FIG. 3 and FIG. 4, left and right connecting stitching lines 50L, 50R are formed by sewing together the left and right edge parts 24Ls1, 24Rs1 of the front panel 24 and the outer peripheral edge parts 20Ls1, 20Rs1 of the side panels 20L, 20R. The front panel 24 is formed into a ring shape extending in the up-down and front-to-back directions by sewing together both longitudinal edge parts 24Es1 and 24Es2.

The connecting line 52L is formed by sewing a front end sewing line 26Ls2 along the short side 26La of the left tether 26L and a connecting line 20Ls2 of the side panel 20L together. Additionally, a rear end sewing line 26Ls1 along the long side 26Lb of the left tether 26L and a connecting line 24Ls1 of the front panel 24 are sewn together to form the connecting line 54L. Similarly, a connecting line 52R is formed by sewing a front end sewing line 26Rs2 along the short side 26Ra of the right tether 26R to the connecting line 20Rs2 of the side panel 20R. Additionally, a rear end sewing line 26Rs1 along the long side 26Rb of the right tether 26R and a connecting line 24Rs1 of the front panel 24 are sewn together to form a connecting line 54R.

As depicted in FIG. 4, the connection lines 54L, 54R formed on the front panel 24 (the front surface 17 of the airbag 14) extend parallel to each other in a substantially vertical direction. As depicted in FIG. 3 and 4, the deployed airbag 14 has a deep recess part 40 formed near the center in the left-right width direction of the front surface 17 (front panel 24), and inclined surfaces 42a, 42b that are inclined so as to protrude toward the occupant as they extend upward and downward from this deepest part 40.

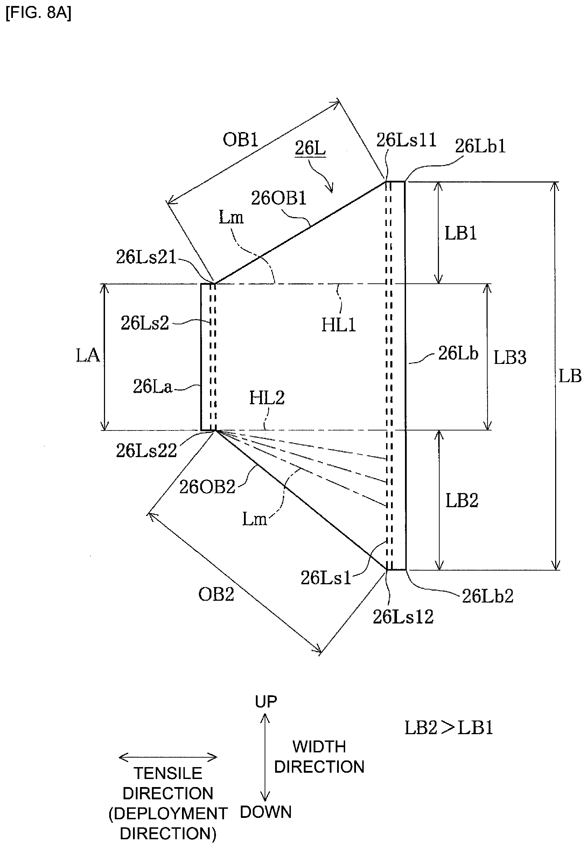

FIG. 8A is a plan view depicting the panel structure of the left tether 26L according to Embodiment 1 of the present invention. As described above, the right tether 26R is the same as the left tether 26L, so only the left tether 26L will be described.

As depicted in FIG. 8A, the tether 26L is formed in a trapezoid shape having a short side 26La and a long side 26Lb that are generally parallel to each other. The sewing lines 26Ls2 and 26Ls1 of the tether 26L are formed at positions slightly shifted inward from the edge part on the short side 26La side and the edge part on the long side 26Lb side. This takes seam allowances into consideration.

The planar shape of the tether 26L can be expressed as a trapezoid, or as a shape in which a right-angled triangle is connected to the upper and lower two opposing sides of a rectangle.

In the present embodiment, the width LB of the rear end 26Lb is set larger than the width LA of the front end (side) of the left and right tethers 26L, 26R, so that the tension near the center (LB3) of the front ends 26La, 26Ra of the tethers 26L, 26R is greater than the tension on the outside (LB1, LB2), forming a deep recess part 40 near the center (see FIG. 3 and FIG. 4). As depicted in FIG. 1, FIG. 3, and FIG. 4, the front surface 17 of the airbag 14 is inclined toward the occupant P moving away from the deep recess part 40 in the vertical direction.

This is because the shortest distance Lm between the rear ends 26Lb, 26Ra of the tethers 26L, 26R and the front ends 26Ls2, 26Rs2 of the tethers 26L, 26R on the connection (sewn, or the like) lines 26Ls1, 26Rs1 to the airbag 14 increases toward the outside in the width direction. As a result, the tension of the tether increases in the portion (LB3) of the front surface of the airbag 14 where the shortest distance Lm is short, and a deep recess part 40 is deeply formed in that portion. In addition, since the tension of the tether is small in the portions (LB1, LB2) where the shortest distance Lm is long, the tether is inclined in a direction approaching the occupant moving away from the deep recess part 40. As a result, the head of the occupant can be appropriately restrained regardless of the physique of the occupant.

As depicted in FIG. 8A, with the left tether 26L, when two imaginary lines HL1, HL2 are drawn extending vertically from an upper end 26La1 and a lower end 26La2 of the short side (front end) 26La toward the long side (rear end) 26Lb, respectively, the length LB1 from the point where the upper line HL1 of the imaginary line intersects with the rear end 26Lb to the upper end 26Lb1 of the rear end 26Lb is shorter than the length LB2 from the point where the lower line HL2 of the imaginary line intersects with the rear end 26Lb to the lower end 26Lb2 of the rear end 26Lb. When the lengths LB1 and LB2 are defined as above, the left and right tethers 26L, 26R in Embodiment 1 satisfy the relationship of the following formula (1).

$$LB2 > LB1 \ldots (1)$$

In addition, with the left tether 26L, as depicted in FIG. 8A, with the length of the oblique side 26OB1 connecting the upper end 26Ls21 of the front end sewing line 26Ls2 along the short side (front end) 26La and the upper end 26Ls11 of the rear end sewing line 26Ls1 along the long side (rear end) 26Lb being designated OB1, and the length of the oblique side 26OB2 connecting the lower end 26Ls22 of the front end sewing line 26Ls2 along the short side (front end) 26La and the lower end 26Ls12 of the rear end sewing line 26Ls1 along the long side (rear end) 26Lb being designated OB2, the sum of OB1 and LB1 is shorter than the sum of OB2 and LB2. When the lengths of OB1, LB1, OB2, and LB2 are defined as above, the left and right tethers 26L, 26R in the first embodiment satisfy the relationship of the following formula (2).

$$OB2+LB2 > OB1+LB1 \ldots (2)$$

With this configuration, when the airbag 14 is deployed, the area of the lower inclined surface 42b below the boundary (deep recess part) of the center part 40x of the recess part 40 becomes larger, which has the advantage of improving the restraint performance for small occupants.

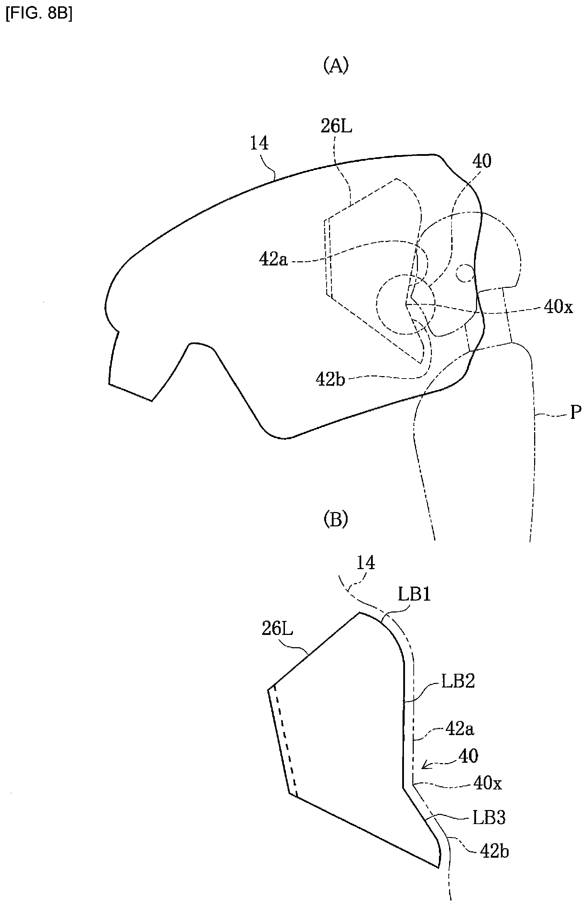

Specifically, with the airbag 14 of Embodiment 1, as depicted in FIG. 8B(A) and (B), the recess part 40 formed in the front panel 24 when expanded and deployed has an upper inclined surface 42a and a lower inclined surface 42b, with the vertical center part 40x (deep recess part) as the boundary, and the lower inclined surface 42b protrudes more toward the occupant P than the upper inclined surface 42a. Based on satisfying the relationship of the above formulas (1) and (2), when the airbag 14 is expanded and deployed and the tether 26L is stretched between the front panel 24 and the side panel 20L inside the airbag 14, the tension of the tether 26L is relatively strong at the portions LB1 and LB3 located on the upper inclined surface 42a side, and the tension of the portion LB2 located on the lower inclined surface 42b side is relatively weak. As a result, the protrusion 40 has a shape in which the lower inclined surface 42b protrudes toward the occupant P further than the upper inclined surface 42a.

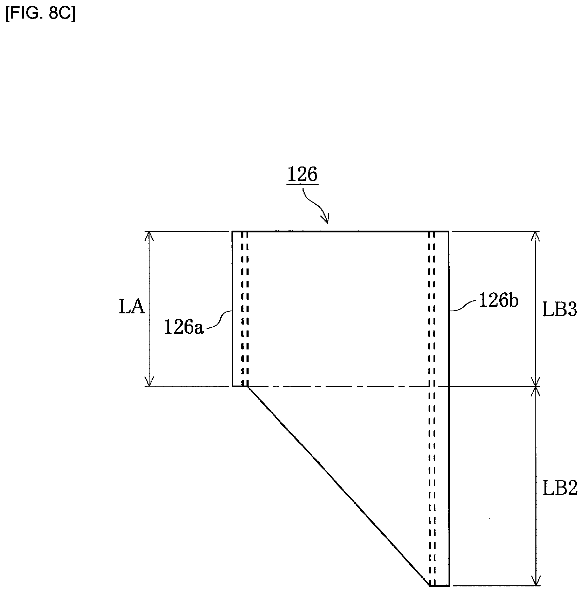

FIG. 8C is a plan view depicting the configuration of a tether 126 according to a modified example of Embodiment 1. In this modified example, the position and length of the rear end 126b of the tether are changed relative to the front end 126a.

In this modified example, a region LB2 where a rear end 126b of the tether 126 extends downward is large compared to the front end 126a, and a region LB1 where the rear end 126b extends upward is not present. In other words, this modified example can be seen as an example of the case where LB1=0, and satisfies the relationship of the above formula (1). When such a tether 126 is employed in Embodiment 1, the area of the portion 42b below the deep recess part 40 becomes even larger.

(Embodiment 2)

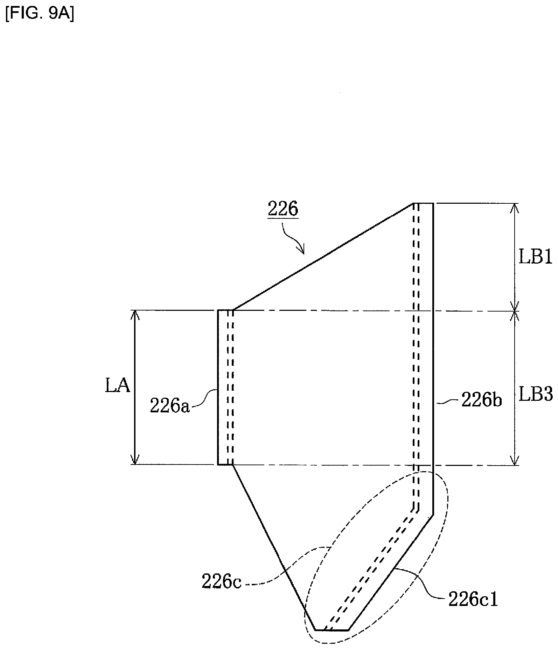

As depicted in FIG. 9A, a tether 226 of Embodiment 2 is based on a trapezoid having parallel short sides (front end) 226a and long sides (rear end) 226b, and a notch part 226c is formed in which the lower end portion of the long side of the trapezoid extends in the direction of the short side. In Embodiment 2, the end part 226c1 of a notch part 226c is a straight line. In the present embodiment, the presence of a notch part 326c makes it possible to adjust the inclination angle of the portion 42b below the deep recess part 40 of the deployed airbag 14 to be gentler.

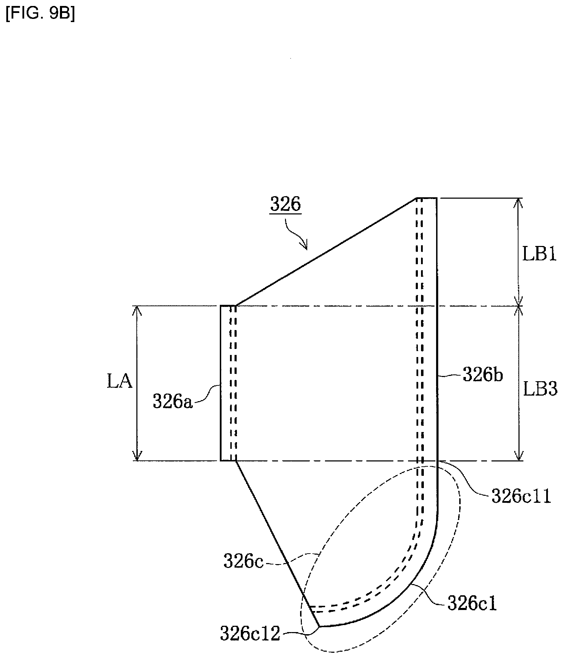

FIG. 9B is a plan view depicting the configuration of a tether 326 according to a modified example of Embodiment 2. The tether 326 in the present Modified Example is based on a trapezoid having parallel short sides (front end) 326a and long sides (rear end) 326b, and a notch part 326c is formed in which the lower end portion of the long side of the trapezoid extends toward the short side. In the present Modified Example, the shape of end part 326c1 of notch part 326c is curved and bulges outward from a straight line connecting both ends 326c11, 326c12 of end part 326c1. With tether 326, the length of the portion indicated by LB1 is shorter than the length of the curved portion extending from a first end 326c11 to a second end 326c12 on end part 326c1 of notch part 326c.

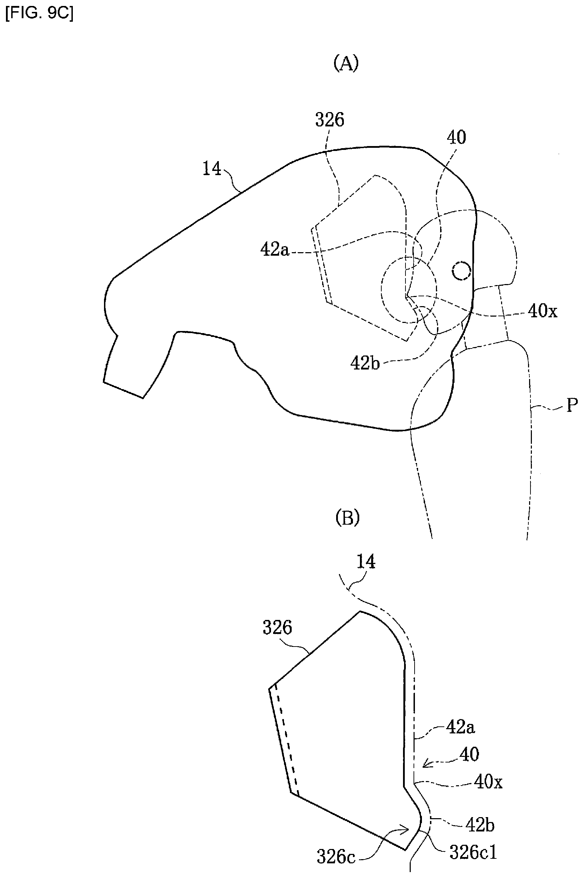

Specifically, with the airbag 14 of the modified example of Embodiment 2, as depicted in FIG. 9C(A) and 9C(B), the recess part 40 formed in the front panel 24 when expanded and deployed has an upper inclined surface 42a and a lower inclined surface 42b, with the vertical center part 40x (deep recess part) as the boundary, and the lower inclined surface 42b protrudes more toward the occupant P than the upper inclined surface 42a. In the present Modified Example, a notch part 326c is provided on the long side (rear end) 326b of the tether 326, and the amount of protrusion of the lower inclined surface 42b is smaller than in Embodiment 1 (see FIG. 8B).

(Embodiment 3)

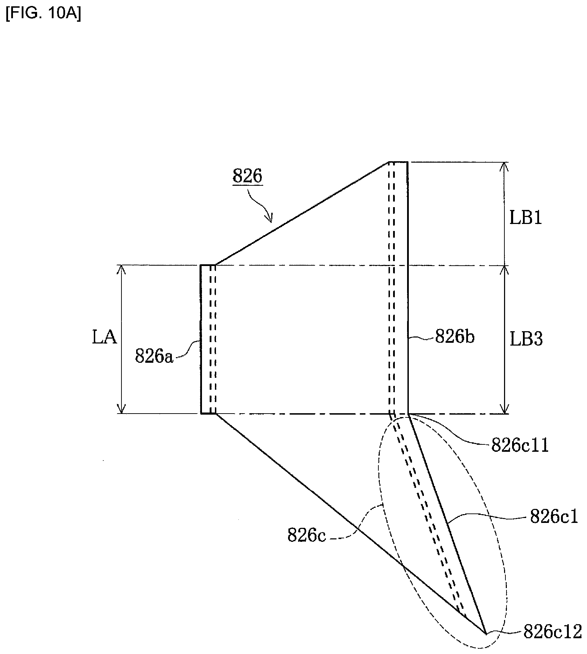

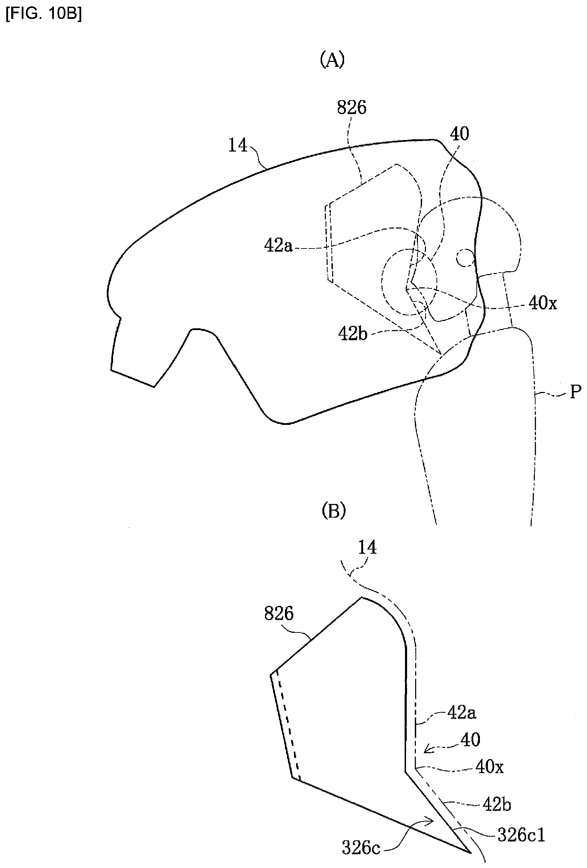

As depicted in FIG. 10A, the tether 826 of Embodiment 3 is based on a trapezoid having parallel short sides (front end) 826a and long sides (rear end) 826b, and a protruding part 826c is formed in which the lower end portion of the long side (rear end) 826b of the trapezoid protrudes in the opposite direction to the short side (front end) 826a. An end part 826c1 of the protruding part 826c is a straight line. With tether 826, the length of the portion indicated by LB1 is shorter than the length of the straight line connecting first end 826c11 and second end 826c12 on end part 826c1 of protruding part 826c. In the present embodiment, the presence of the protruding part 826c makes it possible to adjust the inclination angle of the lower inclined surface 42b below the center part 40x of the deployed airbag 14 so as to be larger.
Specifically, with the airbag 14 of Embodiment 3, as depicted in FIG. 10B(A) and 10B(B), the recess part 40 formed in the front panel 24 when expanded and deployed has an upper inclined surface 42a and a lower inclined surface 42b, with the vertical center part 40x (deep recess part) as the boundary, and the lower inclined surface 42b protrudes more toward the occupant P than the upper inclined surface 42a. In the present Modified Example, a protruding part 826c is provided on the long side (rear end) 826b of the tether 826, and the amount of protrusion of the lower inclined surface 42b is larger than in Embodiment 1 (see FIG. 8B).

(Embodiment 4)

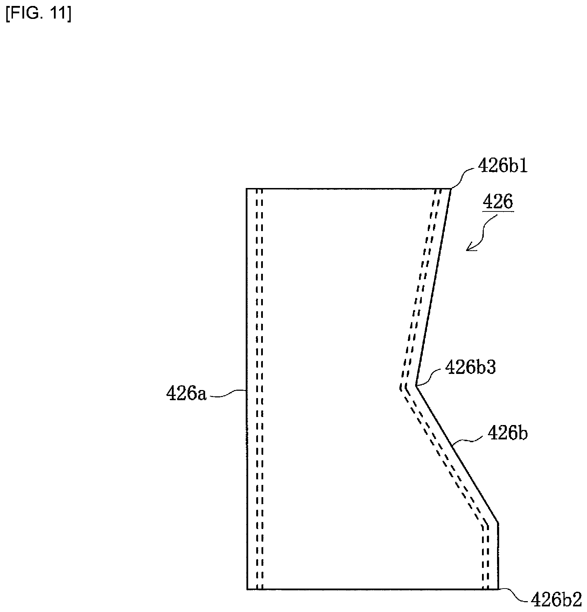

As depicted in FIG. 11, the tether 426 of Embodiment 4 is basically rectangular in plan view, with a first side (front end) 426a of the rectangle extending linearly and a second side (rear end) 426b opposite the first side 426a formed in a shape that is concave toward the inside. In addition, the length from a midpoint 426b3 of the second side (rear end) 426b, which is the part that is most recessed toward the first side (front end) 426a, to the upper end point 426b1 is shorter than the length from the midpoint 426b3 to the lower end point 426b2. In the present embodiment, since the second side (rear end) 426b is recessed inward, the deep recess part 40 of the deployed airbag 14 can be adjusted to extend even deeper.

(Embodiment 5)

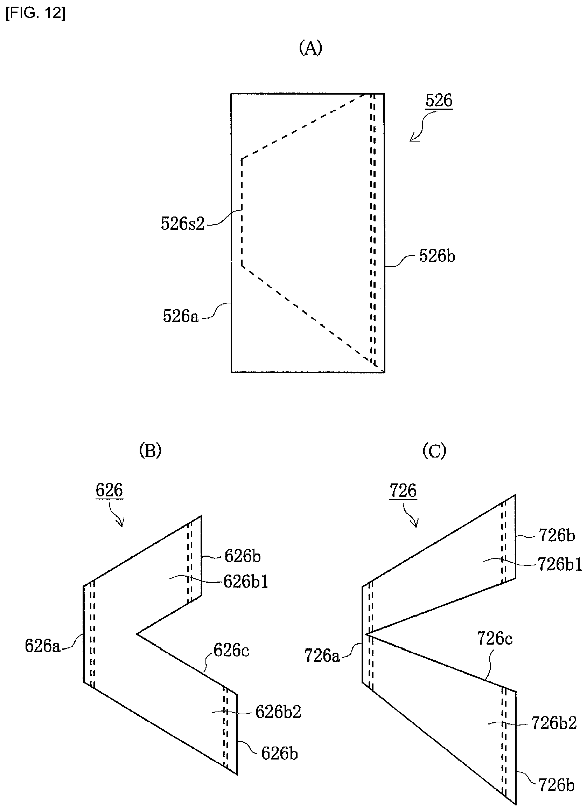

As depicted in FIG. 12A, a tether 526 according to Embodiment 5 is formed in a rectangular shape. An area near the center of a first side (front end) 526a is connected to the side surfaces (19L, 19R) of the airbag 14 by sewing 526s2. A second side 526b is connected to the front surface 17 over the entire length thereof by sewing 526s1. In the present embodiment, if the upper and lower end parts of the rear sewing line 526s1 and the upper and lower end parts of the front sewing line 526s2 are virtually connected (dashed line in the figure), a trapezoidal shape similar to the left tether 26L of Embodiment 1 will be obtained, and the same effect as that of Embodiment 1 is anticipated to be obtained.

(Embodiment 6)

As depicted in FIG. 12(B), a tether 626 according to Embodiment 6 has a shape obtained by providing a V-shaped notch part 626c in the tether 26 of Embodiment 1 depicted in FIG. 8A. The notch part 626c is formed so as to extend from the first side (front end) 626a, which is connected to the side surfaces (19L, 19R) of the airbag 14 by sewing, to the second side (rear end) 626b, which is connected to the front surface 17 of the airbag 14 by sewing. The tether 626 according to the present embodiment has a notch part 626c; thereby becoming a "C" shape that broadens vertically from the front end 626a to the rear end 626b. In Embodiment 6, the first portion 626b1 that broadens toward the upper side is smaller in size than the second portion 626b2 that broadens toward the lower side. The "C" shape can also be described as a V-shape tilted 90 degrees to the side.

(Embodiment 7)

As depicted in FIG. 12(C), a tether 726 of Embodiment 7 has a shape similar to the tether 626 of Embodiment 6 shown in FIG. 12(B), in which a V-shaped notch part 726c is provided in the tether 26 of Embodiment 1. The difference from Embodiment 6 is that the front-end part of the notch part 726c reaches the front end 726a of the tether 726. The tether 726 may be completely separated from the top and bottom by the notch part 726c, or may be slightly connected at the front end 726a. In Embodiment 7, a first portion 726b1 extending upward is smaller in size than a second portion 726b2 extending downward.
In all of the airbag devices 1 of Embodiments 1 to 7 and the modified examples thereof described above, the recess part 40 formed on the front surface 17 of the airbag 14 for restraining the head of the occupant P when the vehicle is subjected to an impact have a suitable shape in which the lower inclined surface 42b, which is below the center part 40x (deep recess part), protrudes toward the occupant P more than the upper inclined surface 42a. As a result, even if the chin of a small occupant (AM05) comes into contact with the airbag 14, the deterioration of the injury value can be minimized.

(Interpretation of the Technical Scope of the Present Invention)

Examples of the present invention have been described above; however, the present invention is not limited in any way to the examples described above and can be changed as appropriate within the scope of the technical idea as that defined in the patent claims.

**EXPLANATION OF CODES**

P.         Occupant
1.          Airbag device
10.        Instrument panel
12.        Inflator
14.        Airbag
17.        Front surface
19R.      Right side surface
19L.      Left side surface
26.        Tether
26L.      Left tether
26La.     Short side (front end)
26Lb.     Long side (rear end)
26R.      Right tether
26Ra.     Short side (front end)
26Rb.     Long side (rear end)
40.        Recessed part
40x.       Center part
42a.       Upper inclined surface
42b.       Lower inclined surface

**Claims**

1.   An airbag device for protecting an occupant in a vehicle, comprising:

   an airbag that expands and deploys toward the occupant by means of expansion gas; and
   a left tether and a right tether provided inside the airbag to regulate the deployed shape of the airbag; wherein
   the airbag has a front surface facing the occupant, and a right side surface and a left side surface located on both the left and right sides of the front surface,
   a front end of the left tether is connected to an inner side of the left side surface of the airbag, and a rear end of the left tether is connected to the front surface,
   a front end of the right tether is connected to the inside of the right side surface of the airbag, and a rear end of the right tether is connected to the front surface, and

the airbag has a recess between the right side tether and the left side tether on the front side thereof, the recess being recessed toward the inside of the airbag, and when a cross section passing through the left-right center of the recess and extending in the front-to-back direction of the vehicle is viewed from one side in the left-right direction, an upper inclined surface and a lower inclined surface are formed with the vertical middle part of the recess as a boundary; and the lower inclined surface is configured to protrude more toward the occupant than the upper inclined surface with respect to a vertical line on the cross section passing through the boundary.

2.   The airbag device according to claim 1, wherein the angle formed by the tangent to the upper inclined surface directly above the boundary and the vertical line is less than or equal to the angle formed by the tangent to the lower inclined surface directly below the boundary and the vertical line.

3.   The airbag device according to claim 1 or 2, wherein each of the left tether and the right tether is formed so that the vertical length of the rear end is greater than the vertical length of the front end.

4.   The airbag device according to claim 1 or 2, wherein the airbag includes a front panel that forms an area including the front surface, and a pair of side panels that form the left side surface and the right side surface.

5.   The airbag device according to claim 1 or 2, wherein the left tether and the right tether are formed in the same shape.

6.   The airbag device according to claim 1 or 2, wherein when the airbag is deployed, the rear ends of the left tether and the right tether extend parallel to each other in a generally vertical direction on the front surface of the airbag.

7.   The airbag device according to claim 1 or 2, wherein the left tether and the right tether are each formed into a generally trapezoid shape having parallel short and long sides, and wherein the short side of the trapezoid corresponds to the front end, and the long side of the trapezoid corresponds to the rear end.

8.   The airbag device according to claim 7, wherein when two imaginary lines are drawn extending perpendicularly from both end parts of the short sides of the trapezoid toward the long side, and LB1 is defined as the length from the point where the upper line of the imaginary lines intersects with the long side to the upper end of the long side, and LB2 is defined as the length from the point where the lower line of the imaginary lines intersects with the long side to the lower end of the long side, LB1 is shorter than LB2.

9. The airbag device according to claim 8, wherein when the length of the oblique side connecting the upper end of the front end sewing line along the short side of the trapezoid and the upper end of the rear end sewing line along the long side is defined as OB1, and the length of the oblique side connecting the lower end of the front end sewing line along the short side and the lower end of the rear end sewing line along the long side is defined as OB2, the sum of OB1 and LB1 is shorter than the sum of OB2 and LB2.

10. The airbag device according to claim 1 or 2, wherein

each of the left tether and the right tether is based on a trapezoid having parallel short and long sides,
a lower end portion of the long side of the trapezoid is formed into a shape with a notch part that is cut in toward the short side,
the short side of the tether corresponds to the front end, and
the long side of the tether corresponds to the rear end.

11. The airbag device according to claim 10, wherein the end part of the notch part is curved and bulges outward.

12. The airbag device according to claim 1 or 2, wherein

each of the left tether and the right tether is based on a trapezoid having parallel short and long sides,
a lower end portion of the long side of the trapezoid is formed into a shape having a protrusion that protrudes in a direction opposite to the short side,
the short side of the tether corresponds to the front end, and
the long side of the tether corresponds to the rear end.

13. The airbag device according to claim 1 or 2, wherein

each of the left tether and the right tether is basically rectangular,
a first side of the rectangle extends linearly and a second side opposite the first side is formed in a shape that is concave toward the inside,
the first side of the tether corresponds to the front end, and
the second side of the tether corresponds to the rear end.

14. The airbag device according to claim 1 or 2, wherein each of the left tether and the right tether is formed in a rectangular shape, with a first opposing side connected to the side surface and a second side connected to the front surface.

15. The airbag device according to claim 1 or 2, wherein each of the left tether and the right tether is formed in a "C" shape that expands vertically from the front end toward the rear end.

16. The airbag device according to claim 15, wherein the left tether and the right tether each have a portion corresponding to a corner of the "C" shape that reaches the front end.

17. The airbag device according to claim 1 or 2, wherein the airbag device is a passenger seat airbag device stowed in an instrument panel of a vehicle.

18. The airbag device according to claim 1 or 2, wherein the airbag device is a driver airbag device stowed in a steering wheel of a vehicle.

[FIG. 1]

UP

FRONT ←——→ BACK

DOWN

[FIG. 2]

[FIG. 3]

[FIG. 4]

[FIG. 5]

[FIG. 6]

(A)                              (B)

V0                               V0

θ₁ ～ 42a                         42a

θ₁ ～ 40x                         θ₁

θ₂ ～ 40x                         40x

θ₂ ～ 42b                         θ₂ ～ 42b

$\theta_1 < \theta_2$            $\theta_1 < \theta_2$

[FIG. 7]

[FIG. 8A]

UP

WIDTH
DIRECTION

LB2＞LB1

TENSILE
DIRECTION
(DEPLOYMENT
DIRECTION)

DOWN

[FIG. 8B]

(A)

(B)

[FIG. 8C]

[FIG. 9A]

[FIG. 9B]

[FIG. 9C]

(A)

(B)

[FIG. 10A]

[FIG. 10B]

(A)

826

14

40

42a

42b

40x

P

(B)

14

826

42a

40

40x

42b

326c

326c1

[FIG. 11]

[FIG. 12]

(A)

526s2

526a

526

526b

(B)

626

626a

626b
626b1

626c

626b2
626b

(C)

726

726a

726b
726b1

726c

726b2
726b

# EP 4 613 571 A1

## INTERNATIONAL SEARCH REPORT

| | International application No. |
|---|---|
| | **PCT/JP2023/042904** |

**A. CLASSIFICATION OF SUBJECT MATTER**

*B60R 21/2338*(2011.01)i; *B60R 21/203*(2006.01)i; *B60R 21/205*(2011.01)i
FI: B60R21/2338; B60R21/205; B60R21/203

According to International Patent Classification (IPC) or to both national classification and IPC

**B. FIELDS SEARCHED**

Minimum documentation searched (classification system followed by classification symbols)

B60R21/2338; B60R21/203; B60R21/205

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-233157 A (TAKATA CORP) 28 August 2001 (2001-08-28)<br>paragraphs [0012], [0031], fig. 1, 3, 8 | 1-18 |
| Y | JP 2008-222083 A (AUTOLIV DEVELOPMENT AB) 25 September 2008 (2008-09-25)<br>fig. 3-4 | 1-18 |
| Y | WO 2018/198443 A1 (AUTOLIV DEVELOPMENT AB) 01 November 2018 (2018-11-01)<br>fig. 3 | 3, 7-13, 15-16 |
| Y | JP 2008-62714 A (KABUSHIKI KAISHA TOYOTA CHUO KENKYUSHO) 21 March 2008<br>(2008-03-21)<br>fig. 1-2 | 18 |
| A | JP 2017-222185 A (TOYOTA JIDOSHA KABUSHIKI KAISHA) 21 December 2017<br>(2017-12-21)<br>paragraph [0052] | 1 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

27

**INTERNATIONAL SEARCH REPORT**

International application No.

**PCT/JP2023/042904**

### C. DOCUMENTS CONSIDERED TO BE RELEVANT

| Category* | Citation of document, with indication, where appropriate, of the relevant passages | Relevant to claim No. |
|---|---|---|
| A | JP 2005-8055 A (TAKATA CORP) 13 January 2005 (2005-01-13)<br>fig. 2 | 1 |
| A | US 2017/0166159 A1 (HYUNDAI MOBIS CO., LTD.) 15 June 2017 (2017-06-15)<br>fig. 3 | 1 |

Form PCT/ISA/210 (second sheet) (July 2022)

## INTERNATIONAL SEARCH REPORT
### Information on patent family members

International application No.

**PCT/JP2023/042904**

| Patent document cited in search report | | | Publication date (day/month/year) | Patent family member(s) | | | Publication date (day/month/year) |
|---|---|---|---|---|---|---|---|
| JP | 2001-233157 | A | 28 August 2001 | US 2001/0033072 A1 paragraphs [0041], [0065], fig. 1, 3, 8 | | | |
| JP | 2008-222083 | A | 25 September 2008 | (Family: none) | | | |
| WO | 2018/198443 | A1 | 01 November 2018 | US 2020/0086821 A1 fig. 3 EP 3617008 A1 | | | |
| JP | 2008-62714 | A | 21 March 2008 | (Family: none) | | | |
| JP | 2017-222185 | A | 21 December 2017 | US 2017/0355346 A1 paragraph [0061] CN 107499275 A | | | |
| JP | 2005-8055 | A | 13 January 2005 | US 2004/0256848 A1 fig. 2 CN 1572641 A | | | |
| US | 2017/0166159 | A1 | 15 June 2017 | CN 107021056 A KR 10-1737793 B1 | | | |

Form PCT/ISA/210 (patent family annex) (July 2022)